# EUROPEAN PATENT SPECIFICATION

(11) **EP 1 967 005 B1**
(45) Date of publication and mention of the grant of the patent: **03.02.2010**
(21) Application number: 06842483.7
(22) Date of filing: 13.12.2006
(51) Int. Cl.: H04N 7/24

(54) **SCRIPT SYNCHRONIZATION USING FINGERPRINTS DETERMINED FROM A CONTENT STREAM**
SKRIPT-SYNCHRONISIERUNG ÜBER AUS EINEM INHALTSSTREAM BESTIMMTE FINGERABDRÜCKE
SYNCHRONISATION DE SCRIPT A PARTIR D'EMPREINTES EXTRAITES D'UN TRAIN DE DONNEES DE CONTENU

(30) Priority: 23.12.2005 EP 05112887
(43) Date of publication of application: 10.09.2008
(73) Proprietor: AMBX UK Limited, Redhill Surrey RH1 1FH (GB)
(72) Inventor: BERKVENS, Winfried Antonius Henricus, NL-5656 AA Eindhoven (NL); VERBERKT, Mark Henricus, NL-5656 AA Eindhoven (NL); HORSTEN, Jan Baptist Adrianus Maria, NL-5656 AA Eindhoven (NL)
(74) Representative: Turner, Richard Charles
(86) International application number: PCT/IB2006/054809
(87) International publication number: WO 2007/072326

(56) References cited:
- EP-A- 1 204 277
- WO-A-03/100548
- WO-A-2005/006758
- WO-A-2005/069640
- DE-A1- 10 064 624
- GB-A- 2 420 465
- US-A1- 2002 169 817
- US-A1- 2002 196 976
- US-A1- 2003 185 417
- US-A1- 2004 015 983
- US-A1- 2005 278 772
- OOSTVEEN J ET AL: "FEATURE EXTRACTION AND A DATABASE STRATEGY FOR VIDEO FINGERPRINTING" LECTURE NOTES IN COMPUTER SCIENCE, SPRINGER VERLAG, BERLIN, DE, vol. 2314, 11 March 2002 (2002-03-11), pages 117-128, XP009017770 ISSN: 0302-9743

## Description

The present system relates to the field of multimedia systems, and, in particular, relates to the synchronization of scripts that are related to perceptual elements and content streams.

With the explosion of home entertainment systems based upon the accelerating evolution of computer technology, there is a desire to create greater user involvement in the actual outputs by developing effects that impact a user's sensory perceptions including changing lights, vibrations, temperatures, winds, sounds, smells, for example. This desire has evolved from the large scale rides that many theme parks are using to attract visitors and the possibilities of developing such dramatic effects in the home, such as related to large screen TVs, high definition TVs, audio experiences, and video games.

The user experience with respect to TV-watching is rapidly changing as new technologies become available. The first signs are already visible in high-end TV's in which lamps are added to enhance the TV experience. Currently, the control of these effects such as lamps including color output and time behavior are based on real-time analysis of the content which requires complex programs, and dedicated equipment.

One possible solution is to have pre-defined scripts made a part of the actual content stream (e.g., video and/or audio). However, the problem is that this requires new standardization activities for streaming content (like MPEG, MP3) by content providers, whether broadcast or prerecorded (e.g., on DVDs) and this standardization is required for all standardized streaming types.

International Publications by WIPO, WO 02/092183 to Koninklijke Philips Electronics entitled, "A Real-World Representation System and Language," and WO 03/100548 to Eves et art, entitled, "Dynamic Markup Language," discloses means for driving and operating devices according to a description in a markup language to render real-world experiences to the user and means for generating a markup language document from fragments.

U.S. Patent 6,642,966 to Limaye discloses a means to synchronize play out control of video content and/or execution of instructions contained in the control data by means of an embedded key in frames of a multimedia content. The key provides both an address for retrieving the control data and associated files and an indication to a future time from the current frame that contains the key when the control data file is to be played out with the video content. In other words, the key specifies when in the future the instructions contained in the control data are to be executed (played). The future time is used, together with a clock indicating the current time, to determine when the data should be played. However, the use of an indication when in the future, data related to a future frame is to be played has problems in that oftentimes, played video content is randomly accessed, such as paused, rewound, fast forwarded, etc. According, there is no way to ensure that a future frame will in fact be played at the future time specified in the key data. In addition, the embedding of a key in the content requires a modification of the original content.

U.S. Patent Application Publication US 2005/0022004 to Mihcak et al. entitled, "Robust Recognizer of Perceptually Similar Content," discloses how fingerprinting may be used in a content item. This reference mentions the use of a hashing technique for synchronization, but fails to provide any methods and devices for synchronization.

It is an object of the present system to overcome these and other disadvantages in the prior art.

The present system provides pre-defined scripts in relation to the content streams for driving/controlling sensory devices, such as lamps of ambient light TV's, in place of real-time analysis for deriving scripts related to the video/audio content. The scripts may be made encoded together with the actual content stream (e.g., video or audio). In another embodiment, the scripts may be distributed and/or be available from a different source than the content stream or just available from the same source but separate from the content stream.

The present system uses a technology, such as fingerprinting technology, to discern information from a content stream to facilitate synchronization of the content stream with a script stream. The script stream may be used for controlling lights, blowers, etc., to enhance the user's experience while consuming content, such as watching television, listening to music, etc.

Briefly stated, a content stream is received by a receiver where a fingerprint value is calculated from a portion of the content stream in accordance with a given algorithm. In a video stream, the portion of the video stream may be a given frame or a plurality of frames. The fingerprint value is utilized to access a fingerprint database, which acts as a lookup table to retrieve a particular time position of the content stream that corresponds to the fingerprint and thereby, also corresponds to a time position in the content stream. The particular time position is then input to a script clock which associates a clock value with that time position. The clock value is then input into a script output generator. The script stream may be retrieved from a script server by the script generator. A portion of the script stream that corresponds to the clock value is provided to a rendering device in synchronization rendering with the corresponding portion of the content stream.

To adjust for a potential delay due fo a processing time of the script output generator, the content stream may be input into a content buffer that adjusts the output of the content stream to the content rendering device, such as a playback device. For example, the buffer time may be equal to the processing time of accessing the fingerprint database plus the processing time of the script output generator so that the effects signal to the effects rendering device, such as an effects controller, is synchronized with the rendering of the content stream. In this way, the script stream is utilized to produce one or more sensory effects that are output in the effects signal for the effects controller in synchronization with the rendering of the content stream by the receiver. In some embodiments, it may not be possible to buffer the content stream. The rendering of the content stream may not be under the control of the user system (in case we just listen to the content stream but are not in path of the content stream). So, in some embodiments the content stream may be delayed. In other embodiments where the rendering of the content can not be delayed, the time position may be adjusted with a content factor (delta time). This delta time may be a positive or negative value depending on the delay differences in the content stream path and the fingerprinting and script output generator path.

A system and method is provided for synchronizing a content stream and a script stream for outputting one or more sensory effects in a multimedia system, as recited in the independent claims. In one embodiment, the system and method includes determining fingerprints from the content stream where there is at least one fingerprint determined in a predetermined time interval or sequence interval of the content stream. The fingerprint information is input into a fingerprint database where a corresponding time position is retrieved. This time position is then input in a clock which associates a clock value with the time position. The receiver retrieves a portion of a script stream that corresponds to the content stream and the clock value. The script stream is utilized to produce one or more sensory effects that are output in an effects signal for an effects controller. The effects signal is produced in synchronization with the rendering of the content stream.

In one embodiment, a fingerprint database produces a script identifier from the fingerprint of the content stream. The receiver may extract from the database the script identifier which is used to retrieve a particular script stream and a particular fingerprint and time value pairs table that corresponds to the script identifier. The clock value is used to position the identified script stream with the content stream. In another embodiment, the script identifier may be found by sending a fingerprint of the content stream to a remote server (e.g., a script identification database) that searches with this fingerprint a large database with all fingerprints from all scripted content and if there is a match a script identifier may be returned. With the script identifier it may also be possible to retrieve the table with the fingerprint and time value pairs needed for the identified content.

The following are descriptions of illustrative embodiments that when taken in conjunction with the following drawings will demonstrate the above noted features and advantages, as well as further ones. In the following description, for purposes of explanation rather than limitation, specific details are set forth such as the particular architecture, interfaces, techniques, etc., for illustration. However, it will be apparent to those of ordinary skill in the art that other embodiments that depart from these specific details would still be understood to be within the scope of the appended claims. Moreover, for the purpose of clarity, detailed descriptions of well-known devices, circuits, and methods are omitted so as not to obscure the description of the present system.

It should be expressly understood that the drawings are included for illustrative purposes and do not represent the scope of the present system. In the accompanying drawings, like reference numbers in different drawings designate similar elements.
FIG. 1 illustrates the means for synchronizing the content stream with the script stream in accordance with an embodiment of the present system by means of fingerprint information; and
FIG. 2 is an example of a content stream and corresponding script stream in accordance with an embodiment of the present system.

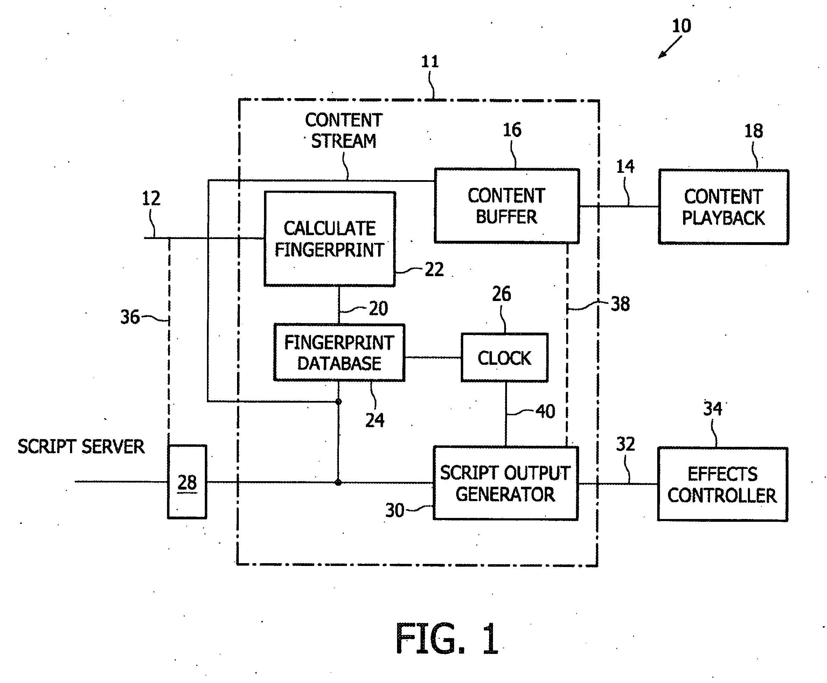

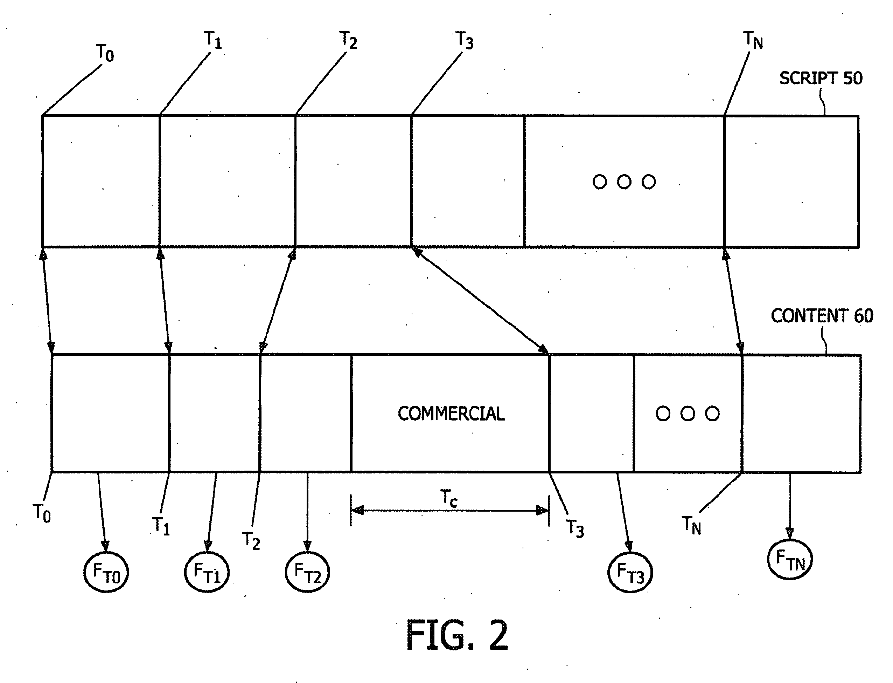

The present system 10 of script/content synchronization is illustrated in the FIGS. 1 and 2 and described herein. Referring to FIG. 1, a content stream 12 (e.g., provided by a broadcaster, by a DVD producer/player, etc.), is input into a receiver 11. The content stream is input into a fingerprint calculator 22 that determines, calculates, etc., fingerprints F_{T0}, F_{T1}, F_{T2}, F_{T3}, .. F_{TN}, at select frame intervals (see, FIG. 2), time intervals, key frames, etc. of the content stream. In this way, each fingerprint corresponds to a particular start time (e.g., times T0, T1, T2, T3, ... TN) of portions of the content stream.

The fingerprint is determined, calculated, etc., from the content stream by operating upon the information (e.g., digital, analog, etc.) in the content stream. The fingerprint may be determined in any manner, including performing a hashing function on the selected portions of the content stream data to arrive at a hashed value.

An other example of how the fingerprint may be determined is by calculated (determining) luminance differences between two portions of the video material within one frame and between different frames are. Depending on whether the difference in luminance is positive (brighter) or negative (less bright) a bit representing this difference is set to 1 or 0. The result may be utilized as the fingerprint. Naturally other techniques may be suitably utilized.

The following explanation details the manner of synchronization of a content stream 60 and a corresponding script stream 50. As shown, the content stream 60 is broken into content portions. The content portions correspond to script portions that are intended to be executed in synchronization with the content portions as indicated in FIG. 2 by arrows between the content stream 60 and the script 50. In other words, as the start portion of content stream 60 is rendered that corresponds to a start time To, the script portion, fragment, etc. corresponding to that content portion start time is started and executed in synchronization. The same is performed for each of the portions of the content stream 60 and the script stream 50.

To facilitate operation in accordance with the present system, a fingerprint database 24 is created in advance of the above described synchronized rendering of the content and script. The fingerprint database 24 may contain fingerprint and time value pairs. The fingerprint and time value pairs stored in the fingerprint database are determined (e.g., calculated, measured, etc.,) from the content in the same way (e.g., utilizing the same algorithm) and in the same frame intervals, time intervals, etc. as the fingerprint calculator 22 determines fingerprints during operation of the current system. The time value provides a relative time for the content portion that the fingerprint was derived from in relation to a beginning of the content stream. For example, for a fingerprint derived from a portion of a content stream that would be begin to be serially rendered (e.g., played) at a time T2 from the beginning of the content stream, the time value would be T2. This time value then may be utilized by the present system to identify a starting time of a portion of a script stream that corresponds to this time in the content stream as discussed further below. For this example, the fingerprint database 24 contains a plurality of fingerprint and time value pairs, such as F_{T0}. T0; F_{T1}, T1; F_{T2}, T2; F_{T3}, T3; ... F_{TN}, TN. The fingerprint database 24 may receive the plurality of fingerprint and time value pairs from any source including the script server, the source of the content stream, etc. The fingerprint and time value pairs may be determined and provided by the content or script provider. Regardless of the source, the fingerprint database 24 stores the received fingerprint and time value pairs typically prior to receiving the content stream 12. The number of fingerprint and time value pairs stored is related to the sampling rate for determining fingerprints. The sampling rate for deriving fingerprints controls the number of fingerprint and time value pairs that are stored for a given content stream.

When the content stream 12 is thereafter received by the system 10, as each content stream portion is sampled by the fingerprint calculator 22, a corresponding fingerprint is determined (e.g., F_{T0}, F_{T1}, F_{T2}, F_{T3}, ... F_{TN)} that is output to the fingerprint database 24. Each fingerprint is used as a key that is searched for in the fingerprint database 24 to determine the corresponding time value. The result of the search is the corresponding time value that may then be utilized to adjust a clock 26. The adjusted clock 26 is thereafter utilized to synchronize a script output generator 30 with the rendering of the content. In this way, as for example, a content portion with determined fingerprint F_{T2} is accessed for rendering, whether it is by serial access or random access by the user (e.g., fast forward, rewind, etc.), the script portion that is to be initiated at this time (e.g., the script portion shown corresponding to start time T2) is accessed by the script output generator 30 and may be provided to an effects controller 34 for rendering effects that are synchronized to the rendering of the content portion.

A commercial portion may be received during receipt of the content stream as is shown inserted in the content 60 in FIG. 2. Fingerprints will be determined from the commercial portion by the fingerprint calculator 22 the same as is determined for the content stream. However, the fingerprints of the commercial portion may have no corresponding time value pairs in the fingerprint database 24. Accordingly, for the commercial portion, the script output generator 30 will not retrieve a script portion from the script server 28 for the commercial portion. Nonetheless, the commercial portion will be provided to a content playback device 18, such as a television, for rendering without a script portion being rendered. In this way, when the content portion T3 having a determined fingerprint of F_{T3} (shown following the commercial portion) is accessed, the script portion that is to be initiated at this time (e.g., the script portion shown corresponding to start time T3) is retrieved by the script output generator 28 and may be provided to the effects controller 34 for rendering effects that are synchronized to the rendering of the content portion T3.

The content stream 12 may be distributed by a distribution/transmission channel including over a broadcast channel, the Internet, via optical media, such as digital versatile disk (DVD), etc. The script stream, and the fingerprint and time value pairs may be provided by a script server 28 that, in one embodiment, distributes the script stream and the fingerprint and time value pairs over the same distribution system as the content stream, such as over the Internet. The script stream and the fingerprint and time value pairs may be distributed together with the content stream, or may be distributed separate from the content stream and be provided by another source that, for example, provides designed scripts for content. For example, the content may be provided by a broadcast channel, such as television channel that may also be utilized for distribution of the script stream and the fingerprint and time value pairs. Alternatively, the content may be provided by a broadcast channel while the script stream and the fingerprint and time value pairs are provided by the server 28 over the Internet. In yet another embodiment, the server 28 may be simply a DVD that contains the script stream and the fingerprint and time value pairs. The DVD may be accessed by a local DVD player or media enabled personal computer that is local to the user. In accordance with the present system, regardless of how the content stream, the script stream, and the fingerprint and time value pairs are received, the present system is enabled to play the content stream in synchronization with the script stream.

In an illustrative embodiment, pre-defined scripts and the fingerprint and time value pairs may be provided by the script server 28. The fingerprint and time value pairs are stored in the fingerprint database 24. The script stream is utilized to drive the effects controller 34. Script streams in accordance with the present system have an advantage that they enable more advanced effects than real-time content analysis since the script streams need not be based on the content material solely, but rather may be based on the artistic creativity of a professional script designer.

It should be clearly understood that the effects that are controlled by the script streams may be related to sound, temperature, wind, vibrations, etc., and are only limited by the imagination of the designer and effects equipment available to a user. In accordance with the present system, the appropriate effects, under the control of the script stream, are rendered in synchronization with the content stream by the effects controller 34. The effects controller 34 may provide control signals for appropriate effect generating devices and are not further shown.

An appropriate content buffer device 16 may be utilized between the source of the content stream 12 and the content rendering device 18. The buffer device 16 may be utilized to adjust content or script rendering times to coincide with script rendering times that may be delayed due to processing delays associated with determining the fingerprint, accessing the fingerprint database, and script processing. The script output generator 30 may output an adjustment signal 38 to adjust the delay of the content buffer 16 as necessary.

In a case where there is no fingerprint in the fingerprint database that corresponds to a determined fingerprint, the system may enter a mode where no sensory effect, such as light effects are generated, such as when a commercial portion is detected, or the sensory effects may be based on local real-time content analysis of the content portions.

The use of determined fingerprints for accessing the fingerprint database to identify a corresponding time value also has a benefit in that one script stream may be utilized for a plurality of partially different versions of content. For example, one version of the content may be a complete version while another edited version of the content has portions that are deleted. A script stream that is created for the complete version may still be suitably utilized for the edited version however, script portions corresponding to the deleted content will simply not be accessed by the present system.

The present system also enables a rendering of one of a potential plurality of scripts to be delivered in synchronization with content. For example, delivered content may have a basic script included in the delivery of the content. This script may be operated on as described herein. However, an enhanced script (e.g., a script with additional and/or enhanced effects) may be available through a separate channel and/or may be available for a fee. In accordance with the present system, regardless of how and where this additional script is available and/or delivered, the additional script, in place of the basic script, may also be rendered in synchronization with the content.

In addition, the selection of a script for correspondence with content may be at the discretion and for the selection by the user. In one embodiment, the fingerprint determined from the content portions may also be utilized by the script output generator to identify the content (content ID) since the fingerprints may be determined to be unique, such as may be created utilizing a hashing function. In this way, the script output generator, with the content ID may identify a corresponding script available at the script server 20, from a potential plurality of scripts, some of which may correspond to other content. In response to the content ID, the present system may provide a user an option to select and/or purchase a script, potentially from among a plurality of scripts, that are available from the script server and that correspond to the content (e.g., basic script, premium script, etc.). Further, the content ID may simply be utilized for facilitating access and searching of the fingerprint database. In another embodiment, a content ID may be embedded in the content by, for example, a broadcaster or other originator of the content. For example, a content ID may be embedded into the content stream utilizing a watermark that is detectable, however generally is not discernable by a user during consumption of the content stream. The content ID may then be utilized as described above.

In addition, commercial portions may be treated the same as other content portions. In this way, effects may be rendered in synchronization with commercial portions to enhance the rendering of the commercial portions.

To expedite a search of the fingerprint database 24, in one embodiment if a couple of succeeding fingerprints are found that are part of the same content, the system may use this information to narrow/limit the search in the database for succeeding time values. In a further embodiment, succeeding fingerprints may be stored in such a way in the fingerprint database to hasten serial access as determined by access characteristics of the fingerprint database.

In another embodiment, a next time value (e.g., a time value following a time value for a previously identified fingerprint) may be inserted into the script output generator in case a fingerprint is miscalculated from the content stream, such as may occur due to an artifact in the content stream. A next time value may also be inserted into the script output generator in case a fingerprint is missed, such as if fingerprints are determined from key frames of the content stream and the key frame is missed by the fingerprint calculator 22. In these embodiments, time values may be stored in such a way in the fingerprint database 24 to facilitate identification and access of the next time value.

While the fingerprint database 24 has illustratively been described as storing fingerprint and time value pairs, other arrangements for accessing time values associated with fingerprints may also be suitably utilized. For example, in one embodiment, the fingerprint may be determined in such a way as to correspond to an address. This may be accomplished by determining the fingerprint utilizing, for example, a hashing function, to determine unique addresses represented by a predetermined number of bits that may be utilized to access the fingerprint database directly, for example as the addressing bits for the fingerprint database. In this embodiment, the corresponding time values are stored at memory locations that are accessed by the unique addresses.

In another embodiment, fingerprints may be directly utilized to identify portions of the script stream. In this way, no database may be required and the fingerprint itself may be used to decide on the script portion to be sent to the effects controller. For example, the script portions that correspond to a fingerprint may be stored in memory locations that may be accessed by the fingerprint. In other embodiments, the script portions may be otherwise associated directly with the fingerprint.

The present system may be used for the synchronization of script streams, audio stream, etc. with content streams (e.g., audio, video) to enhance the experience for the user. The present system may be used in all kinds of rendering devices, including audio, video, audio/visual, and text, rendering devices for which light or other enhancements may be coupled to streams of other sensory information. While the illustrative discussion used the term script stream, as a person of ordinary skill in the art would readily appreciate, other script portions or types may also be suitably utilized, such as script files and data generally.

In some embodiments, that time values may be only calculated once in a while and where the time values are used to adjust a clock. In this embodiment, the clock, with its clock ticks in the end triggers portions of the script stream. In this way the system can continue producing effects even if for some time no time values are retrieved (this can be due to processor load of the system, or missing/miscalculated fingerprints for instance).

These embodiments should also be understood to be within the scope of the present claims.

In interpreting the appended claims, it should be understood that:
a) the word "comprising" does not exclude the presence of other elements or acts than those listed in a given claim;
b) the word "a" or "an" preceding an element does not exclude the presence of a plurality of such elements;
c) any reference signs in the claims do not limit their scope;
d) several "means" may be represented by the same item or hardware or software implemented structure or function;
e) any of the disclosed elements may be comprised of hardware portions (e.g., including discrete and integrated electronic circuitry), software portions (e.g., computer programming), and any combination thereof;
f) hardware portions may be comprised of one or both of analog and digital portions;
g) any of the disclosed devices or portions thereof may be combined together or separated into further portions unless specifically stated otherwise; and
h) no specific sequence of acts or steps is intended to be required unless specifically indicated.

## Claims

1. A method for synchronizing a content stream (60) and a script (50) for outputting one or more sensory effects in a multimedia system, the method comprising the acts of:
calculating (22) a fingerprint from a portion of the content stream;
determining (24) a time value corresponding to the fingerprint;
adjusting a clock (26) with the time value;
utilizing the adjusted clock (26) to synchronize the script (50) and the portion of the content stream (14), the script (50) representing one or more sensory effects to be output in an effects signal (32) to an effects controller (34); and triggering portions of the script (50) from the clock (26).

2. The method of Claim 1, comprising the act of delivering the portion of the content stream (60) to a content rendering device (18) for rendering in synchronization with the script (50).

3. The method of Claim 2, comprising the act of delaying the delivering of the content stream (60) until the script (50) is ready to be rendered.

4. The method of Claim 2, comprising the act of delaying or forwarding the script (50) until the content stream (60) is ready to be rendered.

5. The method of Claim 2, comprising the acts of:
analyzing the portion of the content stream (60) if no time value is associated with the fingerprint; and
providing one or more sensory effects based on the analyzed portion of the content stream (60).

6. The method of Claim 1, comprising the acts of:
determining a script identifier associated with the fingerprint; and
retrieving the script (50) from a script server (28).

7. The method of Claim 1, wherein for each content stream (60) there is a plurality of scripts (50) available, the method comprising the act of selecting one of the plurality of scripts (50) available for retrieval.

8. The method of Claim 1, comprising the act of providing a user an option to select one of the plurality of scripts available for retrieval.

9. A receiver for synchronizing a received content stream (12) and a script for outputting one or more sensory effects in a multimedia system, the receiver comprising:
means for calculating fingerprints (22) from a portion of the content stream;
means for determining a time value (24) corresponding to the fingerprint;
a clock (26), the clock (26) being adjusted with the time value (24)
means for utilizing the adjusted clock (26) to synchronize the script (50) and the portion of the content stream (60), the script (50) representing one or more sensory effects to be output in an effects signal (32) to an effects controller (34); and means for triggering portions of the script (50) from the clock (26).

10. The receiver of Claim 9, wherein if no time value corresponds to the fingerprint, the means for synchronizing the script (30) is configured to provide no script.

11. The receiver of Claim 9, wherein if no time value corresponds to the fingerprint, the means for synchronizing the script (30) is configured to analyze the portion of the content stream (60) and provide a script based on the analyzed portion of the content stream (60).

12. The receiver of Claim 9, comprising:
a means for determining a script identifier (24) corresponding to the fingerprint; and
means for retrieving the script (30) that corresponds to the script identifier.

13. The receiver of Claim 9, wherein for each content stream (60) there is a plurality of scripts available, and wherein the means for synchronizing the script (30) is configured to select one of the plurality of scripts available for retrieval.

14. The receiver of Claim 9, wherein for each content stream (12) there is a plurality of scripts (50) available, and wherein the means for synchronizing the script (30) is configured to provide a user an option to select one of the plurality of scripts available for retrieval.

15. The receiver of Claim 9, wherein the means for synchronizing the script (30) is configured to provide an out output to control one or more sensory effects selected from the group of lights, sounds, vibrations, temperatures, winds, and smells.

16. The receiver of Claim 9, wherein the script synchronizer (30) is configured to retrieve a script from a script server (28).

17. The receiver of Claim 9, comprising a fingerprint database (24) that is configured to store the time value, wherein the means for determining the time value (22) is configured to retrieve the time value from the fingerprint database (24).

## Patentansprüche

1. Eine Methode zur Synchronisierung eines Contentstream (60) und eines Skripts (50) zur Ausgabe eines oder mehrerer sensorischer Effekte in ein Multimedia-System, wobei die Methode die folgenden Schritte umfasst:
Kalkulation (22) eines Fingerabdrucks aus einem Teil des Contentstream;
Bestimmung (24) eines dem Fingerabdruck entsprechenden Zeitwertes;
Einstellung eines Taktgebers (26) mit dem Zeitwert;
Benutzung des eingestellten Taktgebers (26), um das Skript (50) und den Teil des Contentstream (14) zu synchronisieren, wobei das Skript (50) einen oder mehrere sensorische Effekte darstellt, der/die in einem Effektensignal (32) an einen Controller von Effekten (34) auszugeben ist/sind; sowie Auslösung von Teilen des Skripts (50) vom Taktgeber (26).

2. Die Anspruch 1 entsprechende Methode, die den Schritt umfasst, den Teil des Contentstream (60) an eine Content-Wiedergabevorrichtung (18) zu liefern, um in Synchronisation mit dem Skript (50) wiedergegeben zu werden.

3. Die Anspruch 2 entsprechende Methode, die den Schritt umfasst, die Lieferung des Contentstream (60) zu verzögern, bis das Skript (50) wiedergabebereit ist.

4. Die Anspruch 2 entsprechende Methode, die den Schritt umfasst, das Skript (50) zu verzögern oder weiterzuleiten, bis der Contentstream (60) wiedergabebereit ist.

5. Die Anspruch 2 entsprechende Methode, die folgende Schritte umfasst:
Analysieren des Teils des Contentstream (60), wenn mit dem Fingerabdruck kein Zeitwert verbunden ist; und
Bereitstellung eines oder mehrerer sensorischer Effekte auf Basis des analysierten Teils des Contentstream (60).

6. Die Anspruch 1 entsprechende Methode, die folgende Schritte umfasst:
Bestimmung eines Skriptidentifizierungszeichens, das mit dem
Fingerabdruck verbunden ist, sowie Wiedergewinnung des Skripts (50) von einem Skript-Server (28).

7. Die Anspruch 1 entsprechende Methode, bei der eine Mehrzahl von Skripts (50) für jeden Contentstream (60) zur Verfügung steht und die Methode den Schritt umfasst, aus der Mehrzahl von Skripts (50), die zur Wiedergewinnung zur Verfügung stehen, ein Skript auszuwählen.

8. Die Anspruch 1 entsprechende Methode, die den Schritt umfasst, einem Benutzer eine Möglichkeit zu bieten, aus der Mehrzahl von Skripts, die zur Wiedergewinnung zur Verfügung stehen, ein Skript auszuwählen.

9. Ein Empfänger zur Synchronisierung eines empfangenen Contentstream (12) und ein Skript, um einen oder mehrere sensorische Effekte in einem Multimedia-System auszugeben, wobei der Empfänger Folgendes umfasst:
Mittel zur Kalkulation von Fingerabdrücken (22) von einem Teil des Contentstream;
Mittel zur Bestimmung eines Zeitwerts (24), der dem Fingerabdruck entspricht;
einen Taktgeber (26), wobei dieser (26) mit dem Zeitwertmittel (24) eingestellt wird, um den eingestellten Taktgeber (26) zur Synchronisierung des Skripts (50) und des Teils des Contentstream (60) zu benutzen, wobei das Skript (50) einen oder mehrere sensorische Effekte darstellt, der/die in einem Effektensignal (32) an einen Controller von Effekten (34) auszugeben ist/sind; sowie Mittel zur Auslösung von Teilen des Skripts (50) vom Taktgeber (26).

10. Bei dem Anspruch 9 entsprechenden Empfänger sind, falls in dem Empfänger kein Zeitwert dem Fingerabdruck entspricht, die Mittel zur Synchronisierung des Skripts (30) so konfiguriert, um kein Skript zu liefern.

11. Bei dem Anspruch 9 entsprechenden Empfänger sind, falls in dem Empfänger kein Zeitwert dem Fingerabdruck entspricht, die Mittel zur Synchronisierung des Skripts (30) so konfiguriert, um den Teil des Contentstream (60) zu analysieren und ein Skript zu liefern, das auf dem analysierten Teil des Contentstream (60) basiert.

12. Der Anspruch 9 entsprechende Empfänger umfasst:
ein Mittel zur Bestimmung eines Skriptidentifizierungszeichens (24), das dem Fingerabdruck entspricht; und
ein Mittel zur Wiedergewinnung des Skripts (30), das dem Skriptidentifizierungszeichen entspricht.

13. In dem Anspruch 9 entsprechenden Empfänger steht für jeden Contentstream (60) eine Mehrzahl von Skripts zur Verfügung, wobei das Mittel zur Synchronisierung des Skripts (30) so konfiguriert ist, um aus der Mehrzahl der zur Wiedergewinnung verfügbaren Skripts eines auszuwählen.

14. In dem Anspruch 9 entsprechenden Empfänger steht für jeden Contentstream (12) eine Mehrzahl von Skripts (50) zur Verfügung, wobei das Mittel zur Synchronisierung des Skripts (30) so konfiguriert ist, um einem Benutzer eine Möglichkeit zu bieten, aus der Mehrzahl von Skripts, die zur Wiedergewinnung zur Verfügung stehen, eines auszuwählen.

15. In dem Anspruch 9 entsprechenden Empfänger sind die Mittel zur Synchronisierung des Skripts (30) so konfiguriert, um eine abgehende Ausgabe zur Kontrolle eines oder mehrerer sensorischer Effekte zu erzielen, der/die aus einer Gruppe von Lichtem, Tönen, Vibrationen, Temperaturen, Winden und Gerüchen ausgewählt worden ist/sind.

16. In dem Anspruch 9 entsprechenden Empfänger ist die Skriptsynchronisierungseinrichtung (30) so konfiguriert, um ein Skript aus einem Skript-Server (28) wiederzugewinnen.

17. Der Anspruch 9 entsprechende Empfänger umfasst eine Fingerabdruck-Datenbank (24), die so konfiguriert ist, um den Zeitwert zu speichern, wobei das Mittel zur Bestimmung des Zeitwertes (22) so konfiguriert ist, um den Zeitwert aus der Fingerabdruck-Datenbank (24) wiederzugewinnen.

## Revendications

1. Une méthode de synchronisation d'un flux de contenus multimédias (60) et d'un script (50) pour la production d'un ou de plusieurs effets sensoriels dans un système multimédia, la méthode comprenant les actes de :
calcul (22) d'un marquage de contenus à partir d'une partie du flux de contenus multimédias ;
détermination (24) d'une valeur de temps correspondant au marquage de contenus ;
ajustement de l'horloge (26) sur la valeur de temps ;
utilisation de l'horloge ajustée (26) pour synchroniser le script (50) et la partie du flux de contenus multimédias (14), le script (850) représentant un ou plusieurs effets sensoriels devant être transmis dans un signal d'effets (32) à un contrôleur d'effets (34) ; et déclenchement de parties du script (50) depuis l'horloge (26).

2. Méthode de la Revendication 1, consistant en l'acte de délivrance de la partie du flux de contenus multimédias (60) à un dispositif de rendu de contenus multimédias (18) pour un rendu en synchronisation avec le script (50).

3. Méthode de la Revendication 2, consistant en l'acte de retardement de la délivrance du flux de contenus multimédias (60) jusqu'à ce que le script (50) soit prêt à être rendu.

4. Méthode de la Revendication 2, consistant en l'acte de retardement ou de transmission du script (50) jusqu'à ce que le flux de contenus multimédias (60) soit prêt à être rendu.

5. Méthode de la Revendication 2, comprenant les actes de :
analyse de la partie du flux de contenus multimédias(60) si aucune valeur de temps n'est associée au marquage de contenus ; et
procuration d'un ou de plusieurs effets sensoriels basés sur la partie analysée du flux de contenus multimédias (60).

6. Méthode de la Revendication 1, comprenant les actes de :
détermination d'un identificateur de scripts associé au marquage de contenus ; et
récupération du script (50) d'un serveur de scripts (28).

7. Méthode de la Revendication 1, où pour chaque flux de contenus multimédias (60) il y a une pluralité de scripts (50) de disponibles, la méthode consistant en l'acte de sélection de l'une de la pluralité de scripts (50) disponibles pour une extraction.

8. Méthode de la Revendication 1, comprenant l'acte de procuration à un utilisateur d'une option de sélection de l'une de la pluralité de scripts en vue d'une extraction.

9. Récepteur pour la synchronisation d'un flux de contenus multimédias (12) reçu et d'un script pour la production d'un ou de plusieurs effets sensoriels dans un système multimédia, le récepteur comprenant :
un moyen de calcul des marquages de contenus (22) depuis une partie du flux de contenus multimédias ;
un moyen de détermination d'une valeur de temps (24) correspondant au marquage de contenus ;
une horloge (26), l'horloge (26) étant ajustée sur la valeur de temps (24)
un moyen d'utilisation de l'horloge ajustée (26) pour synchroniser le script (50) et la partie du flux de contenus multimédias (60), le script (50) représentant un ou plusieurs effets sensoriels appelé(s) à être transmis dans un signal d'effets (32) à un contrôleur d'effets (34) ; et un moyen de déclenchement de parties du script (50) depuis l'horloge (26).

10. Récepteur de la Revendication 9, où si aucune valeur de temps ne correspond au marquage de contenus, le moyen de synchronisation du script (30) est configuré de manière à ne procurer aucun script.

11. Récepteur de la Revendication 9, où si aucune valeur de temps ne correspond au marquage de contenus, le moyen de synchronisation du script (30) est configuré de manière à analyser la partie du flux de contenus multimédias (60) et à procurer un script basé sur la partie analysée du flux de contenus multimédias (60).

12. Récepteur de la Revendication 9, comprenant :
un moyen de détermination d'un identifiant de script (24) correspondant au marquage de contenus ; et
un moyen d'extraction du script (30) qui correspond à l'identifiant du script.

13. Récepteur de la Revendication 9, où pour chaque flux de contenus multimédias (60) il y a une pluralité de scripts de disponibles et où le moyen de synchronisation des scripts (30) est configuré de manière à sélectionner l'une de la pluralité de scripts disponibles en vue d'une extraction.

14. Récepteur de la Revendication 9, où pour chaque flux de contenus multimédias (12), il y a une pluralité de scripts (50) de disponibles et où le moyen de synchronisation des scripts (30) est configuré de manière à fournir à un utilisateur une option de sélection de l'une de la pluralité de scripts disponibles en vue d'une extraction.

15. Récepteur de la Revendication 9, le moyen de synchronisation des scripts (30) étant configuré de manière à procurer une sortie pour contrôler un ou plusieurs effets sensoriels sélectionnés à partir du groupe de lumières, sons, vibrations, températures, vents et odeurs.

16. Récepteur de la Revendication 9, le synchroniseur de scripts (30) étant configuré de manière à extraire un script d'un récepteur de scripts (28).

17. Récepteur de la Revendication 9 comprenant une base de données de marquage de contenus (24) qui est configurée de manière à stocker la valeur de temps, le moyen de détermination de la valeur de temps (22) étant configuré pour extraire la valeur de temps de la base de données de marquage de contenus (24).
